# EUROPEAN PATENT APPLICATION

(11) **EP 4 438 806 A1**
(43) Date of publication of application: **02.10.2024**
(21) Application number: 24167224.5
(22) Date of filing: 28.03.2024
(51) Int. Cl.: D21G 9/00

(54) **RIGIDITY LEVEL DETECTION APPARATUS**

(30) Priority: 30.03.2023 JP 2023055688
(71) Applicant: Seiko Epson Corporation, Tokyo 160-8801 (JP)
(72) Inventor: FUKASAWA, Masanao, Suwa-shi, 392-8502 (JP); YATO, Keiichi, Suwa-shi, 392-8502 (JP)
(74) Representative: Lewis Silkin LLP

(57) **Abstract**

Provided is a rigidity level detection apparatus provided in a sheet manufacturing apparatus that manufactures a sheet by performing compression shaping of a defibrated material of a fiber-containing material and configured to detect a rigidity level of the sheet. The rigidity level detection apparatus includes a transport unit that transports the sheet, a press unit having a press member that deforms the sheet by pressing the sheet in a direction intersecting with a transport direction of the sheet while the sheet is transported by the transport unit, a detection unit having a sensor that detects a reaction force exerted from the deformed sheet to the press unit, and a determination unit that determines the rigidity level of the sheet based on a detection value from the sensor.

## Description

The present application is based on, and claims priority from JP Application Serial Number 2023-055688, filed March 30, 2023, the disclosure of which is hereby incorporated by reference herein in its entirety.

### BACKGROUND

### 1. Technical Field

The present disclosure relates to a rigidity level detection apparatus.

### 2. Related Art

There is known a sheet manufacturing apparatus including a crushing unit that crushes wastepaper, a defibration unit that defibrates the crushed pieces obtained by the crushing unit, an accumulation unit that forms a web by accumulating the defibrated material obtained by the defibration unit on a planar surface, a heat and pressure application unit that applies heat and pressure to the web accumulated, a cutting unit that cuts the sheet obtained by the heat and pressure application unit into a predetermined shape, and a sheet collection unit that collects the sheet thus obtained.

Knowing the bending rigidity, e.g., the rigidity level, of a sheet manufactured by such a sheet manufacturing apparatus is desired due to the following advantage. For example, it can be determined that a manufactured sheet is not suitable for use when the rigidity level of the sheet is too low or too high. However, existing sheet manufacturing apparatuses cannot detect the rigidity level of a manufactured sheet and therefore cannot attain the above advantage.

Thus, it is conceivable to apply a rigidity level detection mechanism like the one described in, for example, JP-A-2007-144666 (referred to as Patent Literature 1 below) to a sheet manufacturing apparatus. The rigidity level detection mechanism described in Patent Literature 1 is disposed in a printing apparatus which prints on a sheet which is paper and is configured to loosen the sheet by, during printing, pausing sheet transport partly or decreasing transport speed and detect the amount of loosening using a level sensor.

However, with the rigidity level detection mechanism described in Patent Literature 1, the rigidity level detection requires pausing sheet transport temporarily or decreasing the speed of sheet transport. Thus, application of the rigidity level detection mechanism described in Patent Literature 1 to a sheet manufacturing apparatus would result in lower sheet transport speed and therefore lower sheet productivity. It is thus difficult to detect the rigidity level of a sheet without adversely affecting the sheet productivity.

### SUMMARY

The rigidity level detection apparatus of the present disclosure is a rigidity level detection apparatus provided in a sheet manufacturing apparatus that manufactures a sheet by performing compression shaping of a defibrated material of a fiber-containing material and configured to detect a rigidity level of the sheet, including:
a transport unit that transports the sheet;
a press unit having a press member that deforms the sheet by pressing the sheet in a direction intersecting with a transport direction of the sheet while the sheet is transported by the transport unit;
a detection unit having a sensor that detects a reaction force exerted from the deformed sheet to the press unit; and
a determination unit that determines the rigidity level of the sheet based on a detection value from the sensor.

### BRIEF DESCRIPTION OF THE DRAWINGS

FIG. 1 is a configuration diagram showing an overview of a sheet manufacturing apparatus including a rigidity level detection apparatus according to an embodiment of the present disclosure.
FIG. 2 is a block diagram of the rigidity level detection apparatus shown in FIG. 1.
FIG. 3 is a view of the rigidity level detection apparatus shown in FIG. 1 as seen from above vertically.
FIG. 4 is a view as seen in the direction of arrow A in FIG. 3.
FIG. 5 is a schematic view as seen in the direction of arrow B in FIG. 4, showing a state where press members are not pressed against a sheet.
FIG. 6 is a schematic view as seen in the direction of arrow B in FIG. 4, showing a state where the press members are pressed against a sheet.

### DESCRIPTION OF EMBODIMENTS

A rigidity level detection apparatus of the present disclosure is described in detail below based on a preferred embodiment shown in the drawings attached hereto.

### Embodiment

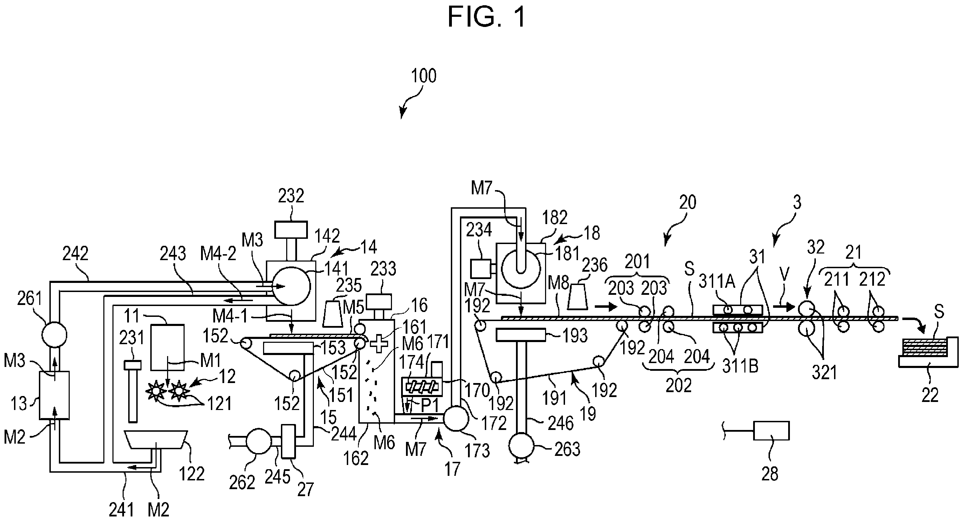

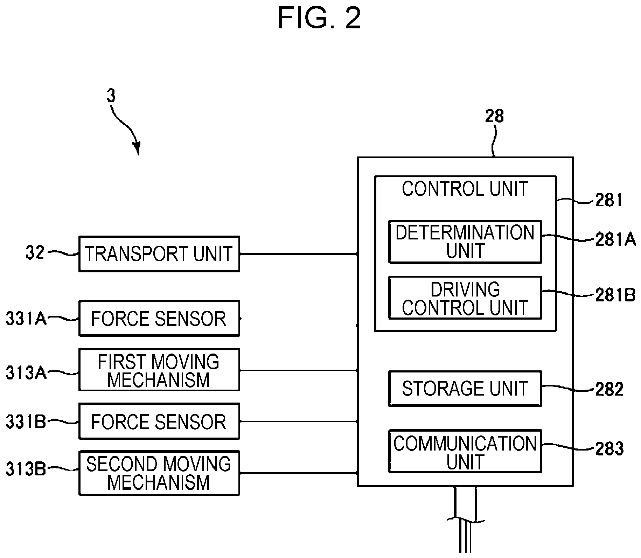

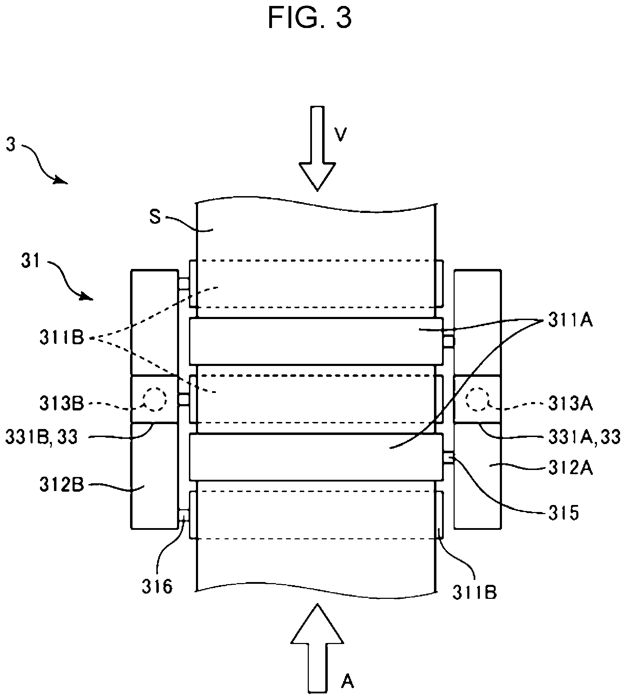

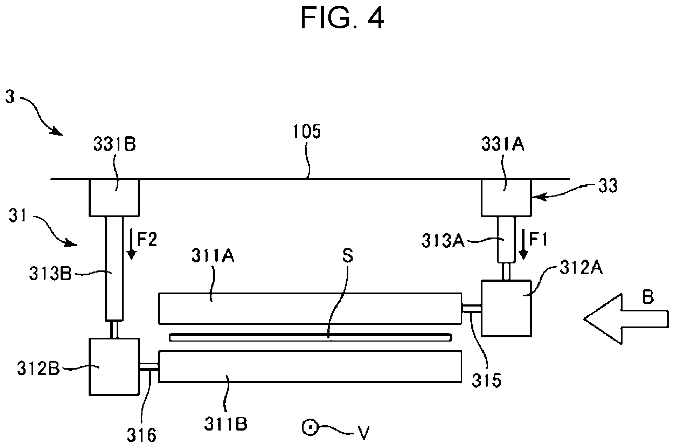

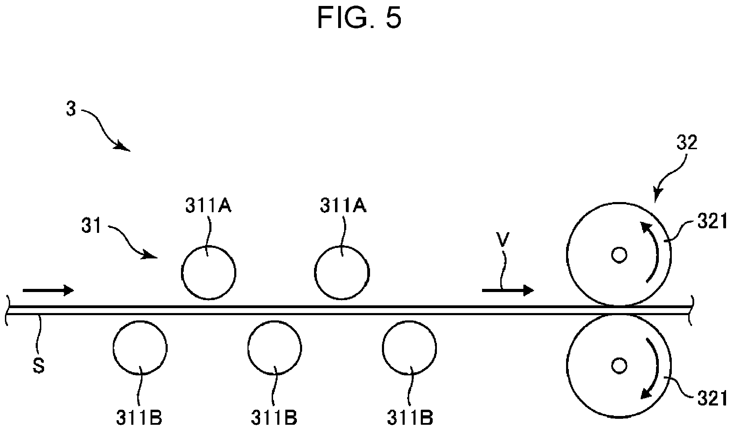

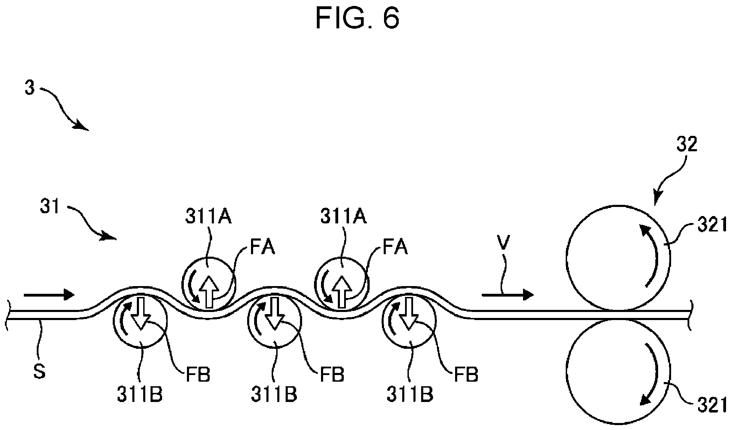

FIG. 1 is a configuration diagram showing an overview of a sheet manufacturing apparatus including a rigidity level detection apparatus according to an embodiment of the present disclosure. FIG. 2 is a block diagram of the rigidity level detection apparatus shown in FIG. 1. FIG. 3 is a view of the rigidity level detection apparatus shown in FIG. 1 as seen from above vertically. FIG. 4 is a view as seen in the direction of arrow A in FIG. 3. FIG. 5 is a schematic view as seen in the direction of arrow B in FIG. 4, showing a state where press members are not pressed against a sheet. FIG. 6 is a schematic view as seen in the direction of arrow B in FIG. 4, showing a state where the press members are pressed against a sheet.

Note that the upper side and the lower side in FIGs. 1, 4, 5, and 6 may be referred as "up" or "above" and "down" or "below" hereinbelow. Also, FIG. 1 is a schematic configuration diagram, and the positional relations, orientations, sizes, and the like of the units of a sheet manufacturing apparatus 100 are not limited to how they are depicted in FIG. 1.

Also, in FIG. 1, the direction in which crushed pieces M2, a defibrated material M3, a first screened material M4-1, a second screened material M4-2, a first web M5, pulverized bodies M6, a mixture M7, a second web M8, and a sheet S are transported, i.e., the direction denoted by arrows V, is also referred to as a transport direction. Also, the tip side of the arrows in FIG. 1 is also referred to as "downstream" in the transport direction, and the base side of the arrows in FIG. 1 is also referred to as "upstream" in the transport direction.

The sheet manufacturing apparatus 100 shown in FIG. 1 is a sheet manufacturing apparatus 100 that generates a sheet S from a raw material M1 which is wastepaper such as, for example, used copy paper. Specifically, the sheet manufacturing apparatus 100 manufactures a sheet S by defibrating a fiber-containing material and performing compression shaping of the defibrated material M3.

As shown in FIG. 1, the sheet manufacturing apparatus 100 includes a raw material supply unit 11, a crushing unit 12, a defibration unit 13, a screening unit 14, a first web formation unit 15, a pulverization unit 16, a mixing unit 17, a dispersion unit 18, a second web formation unit 19, a shaping unit 20, a cutting unit 21, a rigidity level detection apparatus 3 as an example of a rigidity level detection apparatus of the present disclosure, a stock unit 22, a collection unit 27, and a control device 28.

The sheet manufacturing apparatus 100 also includes a humidification unit 231, a humidification unit 232, a humidification unit 233, a humidification unit 234, a humidification unit 235, and a humidification unit 236. In addition, the sheet manufacturing apparatus 100 includes a blower 261, a blower 262, and a blower 263.

Also, in the sheet manufacturing apparatus 100, a raw material supply step, a crushing step, a defibration step, a screening step, a first web formation step, a division step, a mixing step, a disentanglement step, a second web formation step, a sheet formation step, and a cutting step are executed in this order.

The configurations of the units are described below.

As shown in FIG. 1, the raw material supply unit 11 is a part where the raw material supply step is performed in which the raw material M1 is supplied to the crushing unit 12. The raw material M1 is a sheet-shaped material made of a fiber-containing material including cellulose fibers. Note that the cellulose fibers only needs to be a material which is fibrous and contains cellulose as a chemical compound (cellulose in a narrow sense) as its main component, and may contain hemicellulose or lignin besides cellulose (cellulose in a narrow sense). Also, the form of the raw material M1 does not matter: it may be a woven cloth, a nonwoven cloth, or the like. Also, the raw material M1 may be, for example, recycled paper reproduced and manufactured by defibration of wastepaper or may be synthetic paper such as yupo paper (registered trademark). The raw material M1 does not need to be recycled paper.

The crushing unit 12 is a part where the crushing step is performed in which the raw material M1 supplied from the raw material supply unit 11 is crushed in air such as atmosphere. The crushing unit 12 has a pair of crushing blades 121 and a chute 122.

The pair of crushing blades 121 rotate in opposite directions to crush, i.e., cut, the raw material M1 between them, turning it into the crushed pieces M2. The shape and size of the crushed pieces M2 are preferably ones suitable for the defibration process to be performed in the defibration unit 13. Examples of the shape of the crushed pieces M2 include small pieces which are square in planar shape and small pieces which are rectangular or in particular strip-shaped. Also, as the size of the crushed pieces M2, for example, small pieces with their average length along one side being 100 mm or below are preferable, and small pieces with their average length along one side being 3 mm or above and 70 mm or below are more preferable. The shape of the small pieces may be other than a square or a rectangle. Also, the thickness is preferably 0.07 mm or above and 0.10 mm or below.

The chute 122 is disposed below the pair of crushing blades 121 and is, for example, funnel-shaped. The chute 122 can thus receive the falling crushed pieces M2 crushed by the crushing blades 121.

Above the chute 122, the humidification unit 231 is disposed adjacent to the pair of crushing blades 121. The humidification unit 231 humidifies the crushed pieces M2 in the chute 122. This humidification unit 231 is formed by an evaporative (warm-mist evaporative) humidifier that has a moisture-containing filter (not shown) and supplies the crushed pieces M2 with humidified air increased in humidity by passing through the filter. The humidified air, by being supplied to the crushed pieces M2, can help prevent the crushed pieces M2 from being attached to the chute 122 and the like due to static electricity.

The chute 122 is coupled to the upstream of the defibration unit 13 via a pipe 241. Specifically, a downstream end portion of the pipe 241 is coupled to a loading port of the defibration unit 13 shown in FIG. 1. The crushed pieces M2 collected by the chute 122 are transported to the defibration unit 13 through the pipe 241.

As shown in FIG. 1, the defibration unit 13 is a part where the defibration step is performed in which the crushed pieces M2 are defibrated in air, i.e., in a dry method. As a result of this defibration process in the defibration unit 13, a defibrated material M3 can be generated from the crushed pieces M2. Here, "defibration" means disentangling each crushed piece M2, which is formed by a plurality of fibers joined together, into single fibers. Such a disentangled material is the defibrated material M3. The defibrated material M3 is line-shaped or belt-shaped. Also, the defibrated material M3 may be present in a state of being entangled with each other into a clump, i.e., in a state where a so-called "lump" is formed by them.

The defibration unit 13 can also generate, using rotation of a rotor (not shown), an airflow directed from the crushing unit 12 to the screening unit 14, i.e., an air current. This allows the crushed pieces M2 to be introduced to the upstream of the defibration unit 13 from the pipe 241, and after the defibration process, allows the defibrated material M3 to be sent out to the screening unit 14 via a pipe 242.

The pipe 242 is coupled to the downstream of the defibration unit 13. The blower 261 formed by, for example, a turbo fan is disposed at a midway location along the pipe 242. The blower 261 is an air current generation device that generates an air current directed toward the screening unit 14. This promotes introduction of the crushed pieces M2 to the defibration unit 13 and sending of the defibrated material M3 to the screening unit 14. As will be described later, the defibration unit 13, due to its structure, passes the crushed pieces M2 (raw material) therethrough and subjects the crushed pieces M2 to a defibration process smoothly. It is the actuation of the blower 261 disposed downstream of the defibration unit 13 that promotes the passing and the defibration process of the crushed pieces M2 in the defibration unit 13. Note that the blower 261 may be disposed upstream of the defibration unit 13.

The screening unit 14 is a part where the screening step is performed in which the defibrated material M3 is screened depending on the size of the fiber length. In the screening unit 14, the defibrated material M3 is screened into a first screened material M4-1 and a second screened material M4-2 having larger fiber lengths than the first screened material M4-1. The first screened material M4-1 is of size suitable for later manufacturing of the sheet S. By contrast, the second screened material M4-2 includes, for example, insufficiently defibrated fibers, excessively aggregated defibrated fibers, and the like.

The screening unit 14 has a drum portion 141 and a housing portion 142 housing the drum portion 141.

The drum portion 141 is a sieve formed of a hollow cylindrical mesh body and configured to rotate about its center axis. The defibrated material M3 flows into the drum portion 141. Then, with the drum portion 141 rotating, the defibrated material M3 smaller than the mesh openings is screened as the first screened material M4-1, and the defibrated material M3 equal to or larger than the mesh openings is screened as the second screened material M4-2.

The first screened material M4-1 falls down from the drum portion 141.

Meanwhile, the second screened material M4-2 is sent to a pipe 243 coupled to the drum portion 141. The pipe 243 is coupled to a midway location along the pipe 241, at its end portion opposite from the drum portion 141, i.e., on the downstream. The second screened material M4-2 having travelled through this pipe 243 merges with the crushed pieces M2 in the pipe 241 and flow into the defibration unit 13 together with the crushed pieces M2. In this way, the second screened material M4-2 returns back to the defibration unit 13 in order to undergo a defibration process together with the crushed pieces M2.

Meanwhile, the first screened material M4-1 down from the drum portion 141 falls, while being dispersed in air, toward the first web formation unit 15 located below the drum portion 141. The first web formation unit 15 is a part where the first web formation step is performed in which the first web M5 is formed from the first screened material M4-1. The first web formation unit 15 has a mesh belt 151, three tension rollers 152, and a suction portion 153.

The mesh belt 151 is an endless belt on which the first screened material M4-1 accumulates. This mesh belt 151 is looped around the three tension rollers 152. Then, as the tension rollers 152 are driven and rotated, the first screened material M4-1 on the mesh belt 151 is transported downstream.

The first screened material M4-1 is equal to or larger than the openings of the mesh belt 151. Thus, the first screened material M4-1 is restricted not to pass through the mesh belt 151 and therefore can accumulate on the mesh belt 151. Also, the first screened material M4-1 is transported downstream along with the mesh belt 151 while accumulating on the mesh belt 151, thereby formed into a layer-shaped first web M5.

The first screened material M4-1 may have, for example, dust particles and the like mixed therein. Dust particles may be produced as a result of, for example, the crushing and the defibration. Such dust particles are collected by the collection unit 27 to be described later.

The suction portion 153 is a suction mechanism for sucking air from below the mesh belt 151. This enables the dust particles having passed through the mesh belt 151 to be sucked along with the air.

The suction portion 153 is coupled to the collection unit 27 via a pipe 244. The dust particles sucked by the suction portion 153 are collected by the collection unit 27.

The collection unit 27 has a pipe 245 coupled thereto as well. Also, the blower 262 is disposed at a midway location through the pipe 245. Actuation of this blower 262 enables the suction portion 153 to produce suction force. This promotes the formation of the first web M5 on the mesh belt 151. The first web M5 has been removed of dust particles and the like. Meanwhile, by the actuation of the blower 262, the dust particles travel through the pipe 244 and arrives at the collection unit 27.

The housing portion 142 is coupled to the humidification unit 232. The humidification unit 232 is formed by an evaporative humidifier. As a result, the housing portion 142 is supplied with humidified air. This humidified air can humidify the first screened material M4-1, which helps prevent the first screened material M4-1 from attaching to the inner wall of the housing portion 142 due to static electricity.

The humidification unit 235 is disposed downstream of the screening unit 14. The humidification unit 235 is formed by an ultrasonic humidifier that sprays water. This enables the first web M5 to be supplied with moisture, adjusting the amount of moisture in the first web M5. This adjustment helps prevent the first web M5 from sticking to the mesh belt 151 due to static electricity. Thus, the first web M5 is easily separated from the mesh belt 151 at a position where the mesh belt 151 loops back at the tension roller 152.

The pulverization unit 16 is disposed downstream of the humidification unit 235. The pulverization unit 16 is a part where the division step is performed in which the first web M5 separated from the mesh belt 151 is divided into pieces. The pulverization unit 16 has a rotatably supported propellor 161 and a housing portion 162 housing the propellor 161. With the propellor 161 rotating, the first web M5 can be divided into pieces. The divided pieces of the first web M5 are the pulverized bodies M6. The pulverized bodies M6 descend in the housing portion 162.

The housing portion 162 is coupled to the humidification unit 233. The humidification unit 233 is formed by an evaporative humidifier. The housing portion 162 is thereby supplied with humidified air. This humidified air can help prevent the pulverized bodies M6 from attaching to the propellor 161 and the inner wall of the housing portion 162 due to static electricity.

The mixing unit 17 is disposed downstream of the pulverization unit 16. The mixing unit 17 is a part where the mixing step is performed in which the pulverized bodies M6 are mixed with an additive. This mixing unit 17 has an additive supply portion 171, a pipe 172, and a blower 173.

The pipe 172 couples the housing portion 162 of the pulverization unit 16 and a housing 182 of the dispersion unit 18 to each other and is a flow channel through which a mixture M7 of the pulverized bodies M6 and an additive travels.

The additive supply portion 171 is coupled to a midway location along the pipe 172. The additive supply portion 171 has a housing portion 170 housing an additive and a screw feeder 174 provided inside the housing portion 170. As the screw feeder 174 rotates, the additive inside the housing portion 170 is pushed out of the housing portion 170 and supplied into the pipe 172. The additive supplied into the pipe 172 is mixed with the pulverized bodies M6, forming the mixture M7.

Examples of the additive supplied from the additive supply portion 171 include a binder for binding the fibers together, a colorant for coloring the fibers, an aggregation suppressor for suppressing aggregation of the fibers, a flame retardant for making the fibers and the like hard to burn, a paper strength enhancer for enhancing the paper strength of the sheet S, and defibrated fibers, and one of these or a combination of several of these can be used. The following describes, as an example, a case where the additive is a binder P1. When an additive contains a bonding material for bonding fibers together, the sheet S can be enhanced in strength.

Examples of the binder P1 include naturally derived components such as starch, dextrin, glycogen, amylose, hyaluronic acid, kudzu, konjak, dogtooth violet starch, etherified starch, esterified starch, natural gum, fiber inducing glue, seaweeds, and animal proteins, polyvinyl alcohol, polyacrylic acid, and polyacrylamide, and one or a combination of two or more selected from these can be used. However, naturally derived components are preferable, and starch is more preferable. Also, for example, thermoplastic resins such as polyolefins, acrylic resin, polyvinyl chloride, polyester, and polyamide, thermoplastic elastomers, and the like can also be used.

Also, the blower 173 is disposed at a midway location along the pipe 172, downstream of the additive supply portion 171. The action of a rotating portion such as vanes that the blower 173 has promotes mixing of the pulverized bodies M6 and the binder P1. Also, the blower 173 can generate an air current flowing toward the dispersion unit 18. This air current allows the pulverized bodies M6 and the binder P1 to be agitated inside the pipe 172. As a result, the mixtures M7 is transported to the dispersion unit 18, with the pulverized bodies M6 and the binder P1 uniformly dispersed. Also, the pulverized bodies M6 in the mixture M7 are disentangled in the process of travelling through the pipe 172 into finer fibers.

Note that the blower 173 is electrically coupled to the control device 28 and is controlled in its actuation. Also, the amount of air to send into a drum 181 can be adjusted by adjustment of the amount of air blown by the blower 173.

Note that, although not shown, the pipe 172 is forked to have two end portions at the drum 181 side, and the forked end portions are coupled to introduction ports (not shown) formed at an end surface of the drum 181.

The dispersion unit 18 shown in FIG. 1 is a part where the disentanglement step is performed in which fibers in the mixture M7 that are entangled together are disentangled and discharged. The dispersion unit 18 has the drum 181 to which to introduce the mixture M7, which is a defibrated material, and from which to discharge the mixture M7 and the housing 182 housing the drum 181.

The drum 181 is a sieve formed of a hollow cylindrical mesh body and configured to rotate about its center axis. When the drum 181 rotates, fibers and the like in the mixture M7 that are smaller than the openings of the mesh can pass through the drum 181. In this event, the mixture M7 is disentangled and discharged along with air. Thus, the drum 181 functions as a discharge portion that discharges the fiber-containing material.

The drum 181 is coupled to a driving source (not shown), and is rotated by rotation force outputted from the driving source. The driving source is electrically coupled to the control device 28 and is controlled in its actuation.

Also, the housing 182 is coupled to the humidification unit 234. The humidification unit 234 is formed by an evaporative humidifier. Thus, the housing 182 is supplied with humidified air. This humidified air can humidify the housing 182, which helps prevent the mixture M7 from attaching to the inner wall of the housing 182 due to static electricity.

The mixture M7 discharged from the drum 181 falls, while being dispersed in air, toward the second web formation unit 19 located below the drum 181. The second web formation unit 19 is a part where the second web formation step is performed in which the mixture M7 is accumulated to form a second web M8 as deposits. The second web formation unit 19 has a mesh belt 191, tension rollers 192, and a suction portion 193.

The mesh belt 191 is a mesh member and is formed by an endless belt, in the configuration shown. The mixture M7 dispersed and discharged from the dispersion unit 18 accumulates on the mesh belt 191. This mesh belt 191 is looped around four tension rollers 192. Then, as the tension rollers 192 are driven and rotated, the mixture M7 on the mesh belt 191 is transported downstream.

Although the mesh belt 191 is used as an example of a mesh member in the configuration shown, it is to be noted that the present disclosure is not limited to this, and the mesh member may be of, for example, a planar shape.

Most of the pieces of the mixture M7 on the mesh belt 191 are equal to or larger than the openings of the mesh belt 191. Thus, the mixture M7 is restricted not to pass through the mesh belt 191 and therefore can accumulate on the mesh belt 191. Also, the mixture M7 is transported downstream along with the mesh belt 191 while accumulating on the mesh belt 191, thereby formed into a layer-shaped second web M8.

The suction portion 193 is a suction mechanism for sucking air from below the mesh belt 191. This enables the mixture M7 to be sucked onto the mesh belt 191 and thus promotes accumulation of the mixture M7 onto the mesh belt 191.

The suction portion 193 has a pipe 246 coupled thereto. Also, the blower 263 is disposed at a midway location along this pipe 246. Actuation of this blower 263 enables the suction portion 193 to produce suction force.

The humidification unit 236 is disposed downstream of the dispersion unit 18. The humidification unit 236 is formed of an ultrasonic humidifier, like the humidification unit 235. This enables the second web M8 to be supplied with moisture, adjusting the amount of moisture in the second web M8. This adjustment helps prevent the second web M8 from sticking to the mesh belt 191 due to static electricity. Thus, the second web M8 is easily separated from the mesh belt 191 at a position where the mesh belt 191 loops back at the tension roller 192.

Note that the total amount of moisture added by the humidification units 231 to 236 is preferably, for example, 0.5 parts by mass or above and 20 parts by mass or below in relation to 100 parts by mass of the material before being humidified.

The shaping unit 20 is disposed downstream of the second web formation unit 19. The shaping unit 20 is a part where the sheet formation step is performed in which the sheet S is formed from the second web M8. This shaping unit 20 has a pressure application portion 201 and a heat application portion 202.

The pressure application portion 201 has a pair of calender rollers 203, and the second web M8 can be pressed between the calender rollers 203 without heat application. This increases the density of the second web M8. Note that, when heat is applied, the degree of heat application is, for example, preferably a degree not melting the binder P1. Then, this second web M8 is transported to the heat application portion 202. Note that one of the pair of calender rollers 203 is a driver roller driven by the actuation of a motor (not shown), and the other one is a driven roller.

The heat application portion 202 has a pair of heat application rollers 204, the second web M8 can be pressed between the heat application rollers 204 while being heated. As a result of this application of heat and pressure, the binder P1 melts in the second web M8, and the fibers are bound to each other via the melted binder P1. The sheet S is thereby formed. Then, this sheet S is transported toward the cutting unit 21. Note that one of the pair of heat application rollers 204 is a driver roller driven by the actuation of a motor (not shown), and the other one is a driven roller.

Although the shaping unit 20 in the present embodiment has the pressure application portion 201 and the heat application portion 202 and is configured to obtain a belt-like sheet S by performing compression shaping with heat application on the second web M8, the present disclosure is not limited to this, and the shaping unit 20 may be configured to perform compression shaping on the second web M8. The "compression shaping" herein includes compression shaping with heat application and compression shaping without heat application.

The rigidity level detection apparatus 3 is disposed downstream of the shaping unit 20, and the cutting unit 21 is disposed further downstream. The configuration of the rigidity level detection apparatus 3 will be described in detail later. The cutting unit 21 is a part where the cutting step is performed in which the sheet S is cut into desired shape. This cutting unit 21 has a first cutter 211 and a second cutter 212.

The first cutter 211 cuts the sheet S in a direction intersecting with, or especially orthogonal to, a transport direction V of the sheet S.

Downstream of the first cutter 211, the second cutter 212 cuts the sheet S in a direction parallel to the transport direction V of the sheet S. This cutting is to trim unwanted portions of the widthwise end portions of the sheet S in order for the sheet S to have a predetermined width, and is also called ear trimming.

As a result of being cut by the first cutter 211 and the second cutter 212 in the above way, the sheet S with desired shape and size is obtained. Then, this sheet S is transported further downstream, and is then piled up in the stock unit 22.

The units in the sheet manufacturing apparatus 100 are electrically coupled to the control device 28. Then, these units are controlled in their actuation by the control device 28.

As shown in FIG. 2, the control device 28 has a control unit 281, a storage unit 282, and a communication unit 283.

The control unit 281 has at least one processor and executes various programs stored in the storage unit 282. For example, a central processing unit (CPU) can be used as the processor. The control unit 281 has, e.g., the function of controlling actuation of parts of the sheet manufacturing apparatus 100 that are related to sheet manufacturing, such as the function of controlling driving of the blower 261, and the function of controlling the actuation of units of the rigidity level detection apparatus 3. Among the processors of the control unit 281, a processor that determines the rigidity level as will be described later is called a determination unit 281A, and a processor that controls actuation of a press unit 31 and a transport unit 32 to be described later is called a driving control unit 281B.

In the storage unit 282, for example, a program related to sheet manufacturing, a rigidity level detection program for rigidity level detection, and the like are stored. The rigidity level detection program may be stored in an external storage device.

The communication unit 283 is formed by, for example, an I/O interface and communicates with the units of the sheet manufacturing apparatus 100. Also, the communication unit 283 has the function of communicating with a computer, a server, and the like (not shown) via, for example, a network such as the Internet or an intranet.

The control device 28 may be built in the sheet manufacturing apparatus 100 or may be provided in an external device such as an external computer or other terminals. Also, the control unit 281 and the storage unit 282 may be, for example, integral and formed as a single unit. Alternatively, the control unit 281 may be built in the sheet manufacturing apparatus 100, and the storage unit 282 may be provided in an external device such as an external computer. Alternatively, the storage unit 282 may be built in the sheet manufacturing apparatus 100, and the control unit 281 may be provided in an external device such as an external computer.

Also, a region where the rigidity level detection program is stored such as the determination unit 281A, the driving control unit 281B, and the storage unit 282 may be a control device (not shown) different from the control device 28, such as, for example, a computer, a server, a tablet terminal, or a smartphone. Such a control device having the determination unit 281A and the like may be connected to the units of the rigidity level detection apparatus 3 via, for example, a network such as the Internet or an intranet.

Next, the rigidity level detection apparatus 3 is described in detail.

As shown in FIGs. 1 to 6, the rigidity level detection apparatus 3 is provided in the sheet manufacturing apparatus 100 and detects the rigidity level of the sheet S manufactured. The "rigidity level" of the sheet S is bending strength or bending rigidity.

The rigidity level of the sheet S manufactured by the sheet manufacturing apparatus 100 can be known as a result of detection of the rigidity level of the sheet S by the rigidity level detection apparatus 3, and this information can be utilized for, for example, quality control or ranking of the sheet S manufactured. In a specific example, a worker or the like can screen and remove a sheet S with an excessively low or high rigidity level. Consequently, a sheet S the rigidity level of which is within an appropriate range can be obtained.

In the present embodiment, as shown in FIG. 1, the rigidity level detection apparatus 3 is provided between the shaping unit 20 and the cutting unit 21. As shown in FIGs. 2 to 4, the rigidity level detection apparatus 3 has the press unit 31, a transport unit 32, a detection unit 33, the determination unit 281A, and the driving control unit 281B.

The transport unit 32 transports the sheet S before being cut by the cutting unit 21, i.e., the sheet S continuous in a belt shape in the transport direction V, to the cutting unit 21 downstream. The transport unit 32 has a pair of transport rollers 321 arranged next to each other vertically. One of the transport rollers 321 is provided above the sheet S transported, and the other one is provided below the sheet S transported. By rotating in directions opposite from each other, the transport rollers 321 can send and transport the sheet S downstream while holding the sheet S therebetween.

One of the transport rollers 321 is a driver roller which is coupled to a motor (not shown) and is rotated by being driven, and the other one is a driven roller which rotates freely. The motor is electrically coupled to the control device 28. The driving control unit 281B of the control device 28 controls the actuation of the motor. The driving control unit 281B can set the rotation speed of the transport rollers 321, i.e., the transport speed of the sheet S, by controlling the conditions of energization of a motor driver (not shown).

The transport direction V of the sheet S by the transport unit 32 is substantially the same as the transport direction V of the sheet S having supplied from the shaping unit 20. Also, the transport speed of the sheet S by the transport unit 32 is substantially the same as the transport speed of the sheet S supplied from the shaping unit 20. Thus, in the detection and determination of the rigidity level of the sheet S, the rigidity level of the sheet S can be obtained and known without provision of, for example, a buffer for cancelling the difference in transport speed, i.e., a unit for temporarily holding the sheet S, and without reducing the transport speed. What is meant by the transport speeds being "substantially the same" is that the difference in speed is 10% or below.

Note that the configuration of the transport unit 32 is not limited to the one above, and both of the paired transport rollers 321 may be driver rollers that are rotated by being driven. Also, the pair of transport rollers 321 may be disposed upstream of the press unit 31.

The press unit 31 has two first rollers 311A as press members, a first support portion 312A that supports the first rollers 311A in such a manner that they are rotatable, a first moving mechanism 313A, three second rollers 311B as press members, a second support portion 312B that supports the second rollers 311B in such a manner that they are rotatable, and a second moving mechanism 313B.

The first rollers 311A and the first support portion 312A are provided above the sheet S and the first rollers 311A are collectively supported by the first support portion 312A. Each of the first rollers 311A has a rotary shaft 315 and is cantilevered from the first support portion 312A at one side of the rotary shaft 315, i.e., at its right end portion in FIGs. 3 and 4.

The first rollers 311A each have a shape extend in a direction intersecting with the transport direction V of the sheet S, i.e., extending in the width direction of the sheet S. The first rollers 311A are disposed next to each other in the transport direction V of the sheet S, while being spaced away at a predetermined distance.

The first moving mechanism 313A moves the first support portion 312A and the first rollers 311A supported by the first support portion 312A up and down. For example, the first moving mechanism 313A includes a solenoid as a driving source, and the solenoid is electrically coupled to the control device 28. The driving control unit 281B of the control device 28 controls energization conditions via a driver (not shown) and thereby controls the actuation of the first moving mechanism 313A.

Also, the first moving mechanism 313A and the second moving mechanism 313B each have a spring (not shown) therein and the first rollers 311A and the second rollers 311B press the sheet S with certain load in the "pressing state.

The second rollers 311B and the second support portion 312B are provided below the sheet S and the second rollers 311B are collectively supported by the second support portion 312B. Each of the second rollers 311B has a rotary shaft 316 and is cantilevered from the second support portion 312B at one side of the rotary shaft 316, i.e., at its left end portion in FIGs. 3 and 4.

The second rollers 311B each have a shape extending in a direction intersecting with the transport direction V of the sheet S, i.e., extending in the width direction of the sheet S. The second rollers 311B are disposed next to one another in the transport direction V of the sheet S, while being spaced away at a predetermined distance.

The first rollers 311A are supported by the first support portion 312A in such a manner as to be freely rotatable about their respective rotary shafts 315, and the second rollers 311B are supported by the second support portion 312B in such a manner as to be freely rotatable about their respective rotary shafts 316. However, the configuration is not limited to this, and at least one of the first rollers 311A and the second rollers 311B may be configured not to rotate.

Also, although the first rollers 311A and the second rollers 311B are each cantilevered in the present embodiment, the present disclosure is not limited to this, and they may be supported at both sides.

The second moving mechanism 313B moves the second support portion 312B and the second rollers 311B supported by the second support portion 312B up and down. For example, the second moving mechanism 313B includes a solenoid as a driving source, and the solenoid is electrically coupled to the control device 28. The driving control unit 281B of the control device 28 controls energization conditions via a driver (not shown) and thereby controls the actuation of the second moving mechanism 313B.

Note that the driving sources for the first moving mechanism 313A and the second moving mechanism 313B are not limited to solenoids and may be, for example, stepping motors or pneumatically or hydraulically actuated cylinders.

The first rollers 311A and the second rollers 311B are disposed while being displaced from each other in the transport direction V of the sheet S. The first rollers 311A and the second rollers 311B are disposed not to overlap each other when seen in the vertical direction, i.e., the thickness direction, of the sheet S transported.

In detection of the rigidity level of the sheet S, by being actuated by the first moving mechanism 313A, the first rollers 311A move from above, pressing the sheet S downward. Meanwhile, by being actuated by the second moving mechanism 313B, the second rollers 311B move from below, pressing the sheet S upward. As a result of the first rollers 311A and the second rollers 311B moving in the above manner, the sheet S transported deforms in such a manner as to meander vertically as shown in FIG. 6. Also, due to the restoring force of the sheet S trying to restore the original shape, each first roller 311A and each second roller 311B receive a reaction force FA and a reaction force FB from the sheet S, respectively. Each first rollers 311A receives the reaction force FA directed upward from below, and each second roller 311B receives the reaction force FB directed downward from above. The magnitudes of the reaction forces FA and the reaction forces FB correspond to the rigidity level of the sheet S. Specifically, the higher the rigidity level of the sheet S, the larger the reaction forces FA and the reaction forces FB, and the lower the rigidity level of the sheet S, the smaller the reaction forces FA and the reaction forces FB.

Although the present embodiment has the first moving mechanism 313A and the second moving mechanism 313B, it is to be noted that the present disclosure is not limited to this, and one of the first moving mechanism 313A and the second moving mechanism 313B may be omitted. In other words, one of the first rollers 311A and the second rollers 311B may be fixed, not to move vertically.

Also, although the present embodiment employs a configuration in which the first rollers 311A move vertically collectively, the present disclosure is not limited to this, and the first rollers 311A may move vertically independently. Similarly, although the present embodiment employs a configuration in which the second rollers 311B move vertically collectively, the present disclosure is not limited to this, and the second rollers 311B may move vertically independently.

The detection unit 33 has a force sensor 331A that detects the reaction force FA and a force sensor 331B that detects the reaction force FB. As shown in FIG. 4, an upper portion of the force sensor 331A is fixed to, for example, a ceiling surface 105 in the sheet manufacturing apparatus 100. The first moving mechanism 313A is fixed to a lower portion of the force sensor 331A. Similarly, an upper portion of the force sensor 331B is fixed to, for example, the ceiling surface 105 in the sheet manufacturing apparatus 100. The second moving mechanism 313B is fixed to a lower portion of the force sensor 331B.

The force sensor 331A and the force sensor 331B are formed of, for example, piezoelectric force sensors, strain-gauge force sensors, capacitive force sensors, optical force sensors, or the like. The force sensor 331A and the force sensor 331B transmit information on detected forces to the control device 28.

Next, the operation of the rigidity level detection apparatus 3 is described with reference to FIGs. 3 to 6. Note that FIG. 5 omits depiction of the rotary shafts 315, the first support portion 312A, the first moving mechanism 313A, the force sensor 331A, the rotary shafts 316, the second support portion 312B, the second moving mechanism 313B, and the force sensor 331B.

As shown in FIGs. 4 and 5, in a state where the first rollers 311A and the second rollers 311B are not pressed against the sheet S, i.e., in a state where the first rollers 311A and the second rollers 311B are away from the sheet S, the force sensor 331A detects a downward force F1 corresponding to the total weight of the first moving mechanism 313A, the first support portion 312A, and the first rollers 311A. Here, F1 is a known value.

By contrast, as shown in FIG. 6, in a state where the first rollers 311A and the second rollers 311B are pressed against the sheet S, the force sensor 331A detects a value obtained by subtracting a value totaling the reaction forces FA received from the sheet S (FA × 2 in the present embodiment) from the force F1 (F1 - 2FA). This value (F1 - 2FA) is a detection value obtained by the force sensor 331A.

Similarly, as shown in FIGs. 4 and 5, in a state where the first rollers 311A and the second rollers 311B are not pressed against the sheet S, the force sensor 331B detects a downward force F2 corresponding to the total weight of the second moving mechanism 313B, the second support portion 312B, and the second rollers 311B. Here, F2 is a known value.

By contrast, as shown in FIG. 6, in a state where the first rollers 311A and the second rollers 311B are pressed against the sheet S, the force sensor 331B detects a value obtained by adding a value totaling the reaction forces FB received from the sheet S (FB × 3 in the present embodiment) to the force F2 (F2 + 3FB). This value (F2 + 3FB) is a detection value obtained by the force sensor 331B.

The detection value (F1- 2FA) obtained by the force sensor 331A and the detection value (F2 + 3FB) obtained by the force sensor 331B are transmitted to the control device 28, and the determination unit 281A performs, for example, the following processing based on the information transmitted thereto.

The determination unit 281A compares the detection value (F1 - 2FA) with a preset predetermined value (threshold) F0A and compares the detection value (F2 + 3FB) with a preset predetermined value (threshold) F0B. Specifically, when F0A ≥ F1 - 2FA and F0B ≤ F2 + 3FB are both satisfied, the determination unit 281A determines that the reaction forces FA and the reaction forces FB are sufficiently large and thus that the sheet S has a high level of rigidity. By contrast, when at least one of F0A ≥ F1- 2FA and F0B ≤ F2 + 3FB is not satisfied, the determination unit 281A determines that the reaction forces FA or the reaction forces FB are small and thus that the sheet S has a low level of rigidity.

In this way, in the present embodiment, the determination unit 281A ranks the detected rigidity level of the sheet S in two levels: "the sheet S has a high level of rigidity" and "the sheet S has a low level of rigidity".

The predetermined value F0A and the predetermined value F0B are values serving as borders between high and low rigidity levels of the sheet S and can be appropriately set according to the aimed rigidity level of the sheet S. The predetermined value F0A and the predetermined value F0B are stored in the storage unit 282 in advance. The predetermined value F0A and the predetermined value F0B stored in the storage unit 282 can be rewritten to new values.

Note that it may be determined that the sheet S has a high level of rigidity when one of F0A ≥ F1 - 2FA and F0B <_ F2 + 3FB is satisfied.

For example, when the determination unit 281A determines that the sheet S has a high level of rigidity, the sheet S with the detected rigidity level is regarded as an acceptable product, and when the determination unit 281A determines that the sheet S has a low level of rigidity, the sheet S with the detected rigidity level is regarded as an unacceptable product (a defective product). Conversely, the following configuration is also possible. Specifically, when the determination unit 281A determines that the sheet S has a high level of rigidity, the sheet S with the detected rigidity level is regarded as an unacceptable product (a defective product), and when the determination unit 281A determines that the sheet S has a low level of rigidity, the sheet S with the detected rigidity level is regarded as an acceptable product.

Information on whether the sheet S is acceptable or unacceptable may be stored in the storage unit 282 while being linked with the sheet S with the detected rigidity level.

Also, the sheet S determined as an unacceptable product may be removed by a worker after travelling through, for example, the cutting unit 21. In this case, the sheet S determined as an unacceptable product may be provided with a feature indicative of that, such as a marker or a notch.

Although the present embodiment employs a configuration in which the total of the reaction forces FA received by the respective first rollers 311A is detected by a single force sensor 331A, it is to be noted that the present disclosure is not limited to this, and the force sensor 331A may be provided for each of the first rollers 311A independently. Similarly, although the present embodiment employs a configuration in which the total of the reaction forces FB received by the respective second rollers 311B is detected by a single force sensor 331B, it is to be noted that the present disclosure is not limited to this, and the force sensor 331B may be provided for each of the second rollers 311B independently.

In this way, the rigidity level of the manufactured sheet S can be known as a result of the rigidity level detection performed using the rigidity level detection apparatus 3. In particular, because the sheet S is detected in its rigidity level while being transported, the rigidity level detection can be performed in the process of manufacturing the sheet S, without pausing the transport or greatly reducing the transport speed. Thus, the rigidity level of the sheet S can be detected without any adverse effect on the productivity of the sheets S (the volume of the sheets S produced per unit time), i.e., maintaining the aimed productivity. Then, various determinations can be made and various measures can be taken based on the rigidity level of the sheet S or a determination result according to the rigidity level which is, for example, the determination of the sheet S as to whether it is acceptable or unacceptable or a rank.

Also, the rigidity level detection described above may be configured to perform continuously or intermittently over the entire region, in the transport direction V, of the sheet S having travelled through the shaping unit 20. When the rigidity level detection is performed continuously, it is identified which post-cut sheet S is a region for which the rigidity level detection was performed. This identification is done based on, for example, an encoder value from an encoder disposed at a motor for the transport rollers 321.

When the rigidity level detection is performed intermittently over the entire region, in the transport direction V, of the sheet S having travelled through the shaping unit 20, first, the rigidity level is detected with the sheet S being pressed by the press unit 31, as described above. After the detection, the pressing by the press unit 31 is released, and the sheet S is transported by a predetermined length, which is, for example, the length of the single cut sheet S. After that, the rigidity level is detected again with the sheet S being pressed by the press unit 31. The intermittent rigidity level detection can be performed by repeating such a process.

As described above, the rigidity level detection apparatus 3 is provided in the sheet manufacturing apparatus 100 that manufactures the sheet S by performing compression shaping on the defibrated material M3 of a fiber-containing material and detects the rigidity level of the sheet S. Also, the rigidity level detection apparatus 3 includes the transport unit 32 that transports the sheet S, the press unit 31 having the first rollers 311A and the second rollers 311B as press members for deforming the sheet S which is being transported by the transport unit 32 by pressing the sheet S from a direction intersecting with the transport direction V of the sheet S, the detection unit 33 having the force sensor 331A and 331B as a sensors that detects a reaction force exerted from the deformed sheet S to the press unit 31, and the determination unit 281A that determines the rigidity level of the sheet S based on a detection value from the force sensor 331A and 331B. This enables the rigidity level to be detected in the manufacturing process of the sheet S without pausing the transport or greatly reducing the transport speed. Thus, the rigidity level of the sheet S can be detected or determined without any adverse effect on the productivity of the sheets S.

Although the present embodiment employs a configuration in which the rigidity level of the sheet S is determined based on detection values obtained by both of the force sensors 331A, 331B, it is to be noted that the present disclosure is not limited to this, and one of the force sensors 331A, 331B may be omitted.

Also, the press unit 31 has, as press members, at least one first roller 311A (two of them in the present embodiment) provided at the one surface side of the sheet S and at least one second roller 311B (three of them in the present embodiment) provided at the other surface side of the sheet S. Also, the first rollers 311A and the second rollers 311B press the sheet S at its positions displaced from one another in the transport direction V. This enables the reaction force FA and the reaction force FB received from the sheet S to be detected more accurately, and the rigidity level of the sheet S can be detected or determined more accurately.

Also, although the present embodiment describes a case where rollers like the first rollers 311A and the second rollers 311B are used as the press members, the present disclosure is not limited to this, and the press members may be members that are, for example, plate-shaped, bar-shaped, or sphere-shaped.

Also, the press unit 31 includes the first support portion 312A that supports the first roller 311A and the second support portion 312B that supports the second roller 311B, and the detection unit 33 detects a reaction force exerted to at least one (both in the present embodiment) of the first support portion 312A and the second support portion 312B. This enables the rigidity level of the sheet S to be detected or determined more accurately.

Also, the sheet manufacturing apparatus 100 has the shaping unit 20 that forms the second web M8 by compression shaping, the second web M8 being the defibrated material M3 or more specifically deposits of the defibrated material M3, and the cutting unit 21 that cuts the belt-shaped sheet S shaped by the shaping unit 20. Then, the rigidity level detection apparatus 3 is disposed between the shaping unit 20 and the cutting unit 21. Thus, the pre-cut sheet S can be detected in its rigidity level. This enables the press unit 31 to have a relative wide region in the transport direction V or to exert relatively strong pressing forces. As a result, the rigidity level of the sheet S can be detected or determined more accurately.

Although the present embodiment describes a case where the rigidity level detection apparatus 3 is provided between the cutting unit 21 and the shaping unit 20, the position to dispose the rigidity level detection apparatus 3 in the sheet manufacturing apparatus 100 is not limited to this, and for example, the rigidity level detection apparatus 3 may be provided between the stock unit 22 and the cutting unit 21 or inside the stock unit 22.

Also, the speed of transport by the transport unit 32 is substantially the same of the transport speed of the sheet S supplied from the shaping unit 20. As a result, in the detection of the rigidity level of the sheet S, the rigidity level of the sheet S can be detected or determined without provision of a buffer that eliminates the transport speed difference.

Also, the determination unit 281A ranks the rigidity level of the sheet S in a plurality of levels (two levels in the present embodiment). This allows easy grasping of the result of the determination by the determination unit 281A. This offers advantages in making various determinations and taking various measures using the determination results.

Note that the present disclosure is not limited to the above configuration, and the determination unit 281A may be configured to rank the rigidity level of the sheet S in three or more multiple levels or to calculate the actual number indicative of the rigidity level of the sheet S.

The following gives examples of a case where the determination unit 281A ranks the rigidity level of the sheet S in three stages.

The determination unit 281A compares the detection value (F1 - 2FA) with the predetermined value (threshold) F0A and the detection value (F2 + 3FB) with the predetermined value (threshold) F0B as described above and ranks the rigidity level in the following three levels.
Rank 1: High Rigidity Level
   Both of F0A ≥ F1- 2FA and F0B ≤ F2 + 3FB are satisfied.
   Rank 2: Intermediate Rigidity Level
   Only one of F0A ≥ F1 - 2FA and F0B ≤ F2 + 3FB is satisfied.
   Rank 3: Low Rigidity Level
Neither F0A ≥ F1- 2FA nor F0B ≤ F2 + 3FB is satisfied.

With such ranking as well, the determination results obtained by the determination unit 281A can be easily grasped in a similar manner to the above. This consequently offers advantages in making various determinations and taking various measures using the determination results.

The following is an example of a method for the determination unit 281A to calculate an actual number indicative of the rigidity level of the sheet S. Specifically, calibration curves for associating actual measurement values (in the unit of N·m² for example) of the rigidity level of the sheet S with detection values from the force sensor 331A and the force sensor 331B are generated in the form of, for example, a table or the like and are stored in the storage unit 282 in advance. Then, values actually detected by the force sensor 331A and the force sensor 331B are compared with the calibration curves, and the actual number indicative of the rigidity level of the sheet S is found.

Although the rigidity level detection apparatus of the present disclosure has been described above using the embodiment shown, the present disclosure is not limited to this, and the units forming the rigidity level detection apparatus may be replaced by any configurations that may offer similar functions. Also, the rigidity level detection apparatus may have any additional structure.

Also, the sheet manufacturing apparatus 100 may be without the raw material supply unit 11 and the crushing unit 12. In this case, the sheet manufacturing apparatus 100 includes, in place of the raw material supply unit 11 and the crushing unit 12, a crushed piece supply unit that supplies crushed pieces.

Also, a sheet manufacturing apparatus to which the rigidity level detection apparatus of the present disclosure is applied is not limited to the sheet manufacturing apparatus 100 with the configuration shown in FIG. 1 and described in the embodiment, and any configuration may be employed as long as it is a sheet manufacturing apparatus that manufactures sheets by performing compression shaping of a defibrated material of a fiber-containing material.

## Claims

1. A rigidity level detection apparatus provided in a sheet manufacturing apparatus that manufactures a sheet by performing compression shaping of a defibrated material of a fiber-containing material and configured to detect a rigidity level of the sheet, comprising:
a transport unit that transports the sheet;
a press unit having a press member that deforms the sheet by pressing the sheet in a direction intersecting with a transport direction of the sheet while the sheet is transported by the transport unit;
a detection unit having a sensor that detects a reaction force exerted from the deformed sheet to the press unit; and
a determination unit that determines the rigidity level of the sheet based on a detection value from the sensor.

2. The rigidity level detection apparatus according to claim 1, wherein
the press member has at least one first roller provided at a first surface side of the sheet and at least one second roller provided at a second surface side of the sheet, and
the first roller and the second roller press the sheet at positions displaced from each other in the transport direction.

3. The rigidity level detection apparatus according to claim 2, wherein
the press unit includes a first support portion that supports the first roller and a second support portion that supports the second roller, and
the detection unit detects the reaction force exerted to at least one of the first support portion and the second support portion.

4. The rigidity level detection apparatus according to claim 1, wherein
the sheet manufacturing apparatus has a shaping unit that performs compression shaping of the defibrated material and a cutting unit that cuts the sheet of a belt shape shaped by the shaping unit, and
the rigidity level detection apparatus is disposed between the shaping unit and the cutting unit.

5. The rigidity level detection apparatus according to claim 4, wherein
a speed of transport by the transport unit is substantially same as a transport speed of the sheet supplied from the shaping unit.

6. The rigidity level detection apparatus according to claim 1, wherein
the determination unit ranks the rigidity level of the sheet in a plurality of levels.
